# EUROPEAN PATENT APPLICATION

(11) **EP 3 952 100 A1**
(43) Date of publication of application: **09.02.2022**
(21) Application number: 20779685.5
(22) Date of filing: 10.03.2020
(51) Int. Cl.: H02P 3/22, B25J 9/12, H02P 3/06, H02P 3/26, H02P 27/06

(54) **ELECTRIC-MOTOR CONTROL DEVICE AND ROBOT COMPRISING SAME, AND ELECTRIC-MOTOR CONTROL METHOD**

(30) Priority: 25.03.2019 JP 2019055982
(71) Applicant: Kawasaki Jukogyo Kabushiki Kaisha, Hyogo 650-8670 (JP)
(72) Inventor: TAN, Haruhiko, Hyogo 650-8670 (JP); SUMITOMO, Masahiko, Hyogo 650-8670 (JP); TOMINAGA, Shota, Hyogo 650-8670 (JP)
(74) Representative: Witte, Weller & Partner Patentanwälte mbB
(86) International application number: PCT/JP2020/010314
(87) International publication number: WO 2020/195797

(57) **Abstract**

A control device configured to control operation of an electric motor of which a rotational shaft is rotatable by an external force, is provided, which servo-controls the electric motor by an inverter circuit when a voltage value between power-supply input terminals of the inverter circuit is detected to be at or above a given voltage value required for the servo-control of the electric motor, and applies dynamic braking to the electric motor by forming a short circuit in the inverter circuit when the voltage value between the power-supply input terminals of the inverter circuit is detected to be below the given voltage value.

## Description

### TECHNICAL FIELD

The present disclosure relates to an electric motor control device, a robot having the control device, and a method of controlling an electric motor.

### BACKGROUND ART

Conventionally, it is known that control devices control operation of an electric motor of which a rotational shaft could be rotated by an external force. Patent Document 1 discloses a device of controlling fall prevention during a power failure, as one example of the electric motor control devices.

Patent Document 1 discloses the control device of a machine, which prevents, during a power failure, a falling of a gravity shaft which is provided to the machine and could be rotated by the gravity. Patent Document 1 discloses to rapidly decrease a rotational speed of an electric motor when a power failure occurs, by applying a deceleration control to the electric motor by using electrostatic energy accumulated in a capacitor.

### [Reference Document of Conventional Art]

### [Patent Document]

[Patent Document 1] JP1998-263973A

### DESCRIPTION OF THE DISCLOSURE

### [Problem to be Solved by the Disclosure]

However, when a voltage value between power-supply input terminals of an inverter circuit becomes below a given voltage value required for a servo-control of the electric motor, the device of controlling fall prevention during a power failure disclosed in Patent Document 1 cannot brake the electric motor by using the inverter circuit. That is, this device of controlling fall prevention during a power failure may not certainly brake the electric motor.

Therefore, one purpose of the present disclosure is to provide an electric motor control device, a robot having the control device, and a method of controlling an electric motor, capable of certainly braking the electric motor of which a rotational shaft could be rotated by an external force.

### [Summary of the Disclosure]

In order to solve the problem, an electric motor control device according to the present disclosure is a control device configured to control operation of an electric motor of which a rotational shaft is rotatable by an external force. The control device includes an inverter circuit configured to convert direct-current power into alternating-current power and output the converted alternating-current power to the electric motor, a first control circuit configured to control the inverter circuit, and a first voltage detecting circuit configured to detect a voltage value between power-supply input terminals of the inverter circuit, and output the voltage value between the input terminals to the first control circuit. The first control circuit is adapted to servo-control the electric motor by the inverter circuit when the voltage value between the power-supply input terminals of the inverter circuit is detected to be at or above a given voltage value required for the servo-control of the electric motor, and apply dynamic braking to the electric motor by forming a short circuit in the inverter circuit when the voltage value between the power-supply input terminals of the inverter circuit is detected to be below the given voltage value.

According to this configuration, when the voltage value between the power-supply input terminals of the inverter circuit is detected to be below the given voltage value, the electric motor control device according to the present disclosure applies the dynamic braking to the electric motor by forming the short circuit in the inverter circuit. As a result, the electric motor control device according to the present disclosure can certainly brake the electric motor of which the rotational shaft is rotatable by the external force.

The first control circuit may start a servo-control for a deceleration stop of the electric motor when abnormality is detected or the prediction of the abnormality is detected, the abnormality being that the direct-current power is not correctly to be supplied to the inverter circuit.

According to this configuration, the electric motor control device according to the present disclosure can perform the servo-control for the deceleration stop of the electric motor of which the rotational shaft could be rotated by the external force, between the time when the abnormality such that the direct-current power cannot correctly be supplied to the inverter circuit, or the prediction of the abnormality is detected, to the time when the voltage value between the power-supply input terminals of the inverter circuit is detected to be below the given voltage value. As a result, the electric motor control device according to the present disclosure can further certainly brake the electric motor. Moreover, since the electric motor is not suddenly stopped, degradation and damage to the electric motor can be prevented.

The electric motor may be also braked by a non-excitation-actuated-type electromagnetic brake in addition to by the dynamic braking. The electric motor control device may further include a second control circuit configured to control operation of the non-excitation-actuated-type electromagnetic brake. The second control circuit may start a control to brake the electric motor by the non-excitation-actuated-type electromagnetic brake when abnormality is detected or the prediction of the abnormality is detected, the abnormality being that the direct-current power is not correctly to be supplied to the inverter circuit.

According to this configuration, the electric motor control device according to the present disclosure can brake the electric motor by the non-excitation-actuated-type electromagnetic brake, in addition to by applying the dynamic braking to the electric motor of which the rotational shaft is rotatable by the external force. As a result, the electric motor control device according to the present disclosure can further certainly brake the electric motor.

For example, the electric motor control device may further include a conversion circuit configured to convert a form of power supplied from a power supply and output the converted power to the inverter circuit, and a second voltage detecting circuit configured to detect a voltage value between output terminals of the power supply or a voltage value between input terminals of the conversion circuit, and output the detected voltage value to the second control circuit. The second control circuit may detect the abnormality or the prediction of the abnormality based on that the voltage value detected by the second voltage detecting circuit is out of a given normal range, and start the control to brake the electric motor by the non-excitation-actuated-type electromagnetic brake.

The power supply may be an alternating-current power supply, and the conversion circuit may have a converter circuit configured to convert alternating-current power supplied from the alternating-current power supply into direct-current power.

According to this configuration, the electric motor control device according to the present disclosure can be supplied with the alternating-current power from the alternating-current power supply.

The electric motor control device may further include a capacitor parallelly connected to the conversion circuit and the inverter circuit between the conversion circuit and the inverter circuit.

According to this configuration, the electric motor control device according to the present disclosure can perform the servo-control for the deceleration stop of the electric motor by using electrostatic energy accumulated in the capacitor.

For example, the electric motor may be configured to be a 3-phase alternating-current motor. The inverter circuit may be configured to be a 3-phase inverter having three phases. The first control circuit may short-circuit all of the three phases of the 3-phase alternating-current motor to form the short circuit by turning ON all of three arms in one of a first group and a second group, and turning OFF all of three arms in the other group, or may short-circuit two phases of the 3-phase alternating-current motor to form the short circuit by turning ON two arms in one of the groups, turning ON or OFF one arm in the other group and belonging to a phase different from the two arms, and turning OFF all of the remaining three arms, the first group being comprised of three upper arms and the second group being comprised of three lower arms in the inverter circuit.

The first control circuit may turn OFF the three upper arms in the inverter circuit and turn ON the three lower arms to short-circuit all of the three phases of the 3-phase alternating-current motor to form the short circuit.

According to this configuration, the electric motor control device according to the present disclosure can further certainly brake the electric motor of which the rotational shaft is provided to be rotatable by the external force, compared to a case where two phases are short-circuited among the three phases of the 3-phase alternating-current motor to form the short circuit.

For example, the first control circuit may short-circuit any two of the three phases of the 3-phase alternating-current motor to form the short circuit by turning ON any two arms belonging to different phases from each other in the inverter circuit, and turning OFF all of the remaining four arms.

When the first control circuit applies the dynamic braking, the first control circuit may be switchable in a pulse-like manner between a state in which the short circuit is formed in the inverter circuit, and a state in which the short circuit is not formed.

According to this configuration, the electric motor control device according to the present disclosure can adjust the magnitude of the braking force by the dynamic braking.

The first control circuit may apply the dynamic braking to the electric motor by forming the short circuit in the inverter circuit, in an initial state where power is supplied to the first control circuit from a power supply and the first control circuit starts operating, in addition to when the voltage value between the power-supply input terminals of the inverter circuit is detected to be below the given voltage value.

According to this configuration, the electric motor control device according to the present disclosure can prevent the rotational shaft of the electric motor from rotating due to the external force when the first control circuit starts operating by being supplied with the power from the power supply.

In order to solve the problem, a robot according to the present disclosure includes the electric motor control device of any one described above, the electric motor of which the operation is controlled by the electric motor control device, and a robotic arm having a joint shaft configured to be driven by the electric motor.

According to this configuration, since the robot according to the present disclosure includes the electric motor control device of any one described above, it can further certainly brake the electric motor of which the rotational shaft is rotatable by the external force.

The external force may be the gravity, and the rotational shaft of the electric motor may be rotatable by the robotic arm being affected by the gravity.

According to this configuration, the robot according to the present disclosure can prevent that the robotic arm is affected by the gravity and thereby downwardly pivots centering on the rotational shaft of the electric motor.

In order to solve the problem, a controlling method of an electric motor according to the present disclosure is a method of controlling operation of an electric motor of which a rotational shaft is rotatable by an external force. An inverter circuit and a first voltage detecting circuit are prepared in advance, the inverter circuit converting direct-current power into alternating-current power and outputting the converted alternating-current power into the electric motor, and the first voltage detecting circuit detecting a voltage value between power-supply input terminals of the inverter circuit. The method includes the steps of servo-controlling the electric motor by the inverter circuit when the voltage value between the power-supply input terminals of the inverter circuit is detected to be at or above a given voltage value required for the servo-control of the electric motor (First Step), and applying dynamic braking to the electric motor by forming a short circuit in the inverter circuit when the voltage value between the power-supply input terminals of the inverter circuit is detected to be below the given voltage value (Second Step).

According to this configuration, when the voltage value between the power-supply input terminals of the inverter circuit is detected to be below the given voltage value, the controlling method of the electric motor according to the present disclosure applies the dynamic braking to the electric motor by forming the short circuit in the inverter circuit. As a result, the controlling method of the electric motor according to the present disclosure can certainly brake the electric motor of which the rotational shaft is rotatable by the external force.

### [Effect of the Disclosure]

According to the present disclosure, an electric motor control device, a robot having the control device, and a method of controlling an electric motor can be provided, which are capable of certainly braking the electric motor of which a rotational shaft could be rotated by an external force.

### BRIEF DESCRIPTION OF DRAWINGS

Fig. 1 is a schematic view illustrating the entire configuration of a robot according to one embodiment of the present disclosure.
Fig. 2 is a circuit diagram illustrating an electric motor control device according to this embodiment of the present disclosure.
Fig. 3 is a schematic time chart when the electric motor control device according to this embodiment of the present disclosure performs a control in a first mode.
Fig. 4 is a schematic time chart when the electric motor control device according to this embodiment of the present disclosure performs a control in a second mode.
Fig. 5 is a schematic time chart when the electric motor control device according to this embodiment of the present disclosure performs a control in a third mode.
Fig. 6 is a flowchart illustrating processing executed by a first control circuit provided to the electric motor control device according to this embodiment of the present disclosure.
Fig. 7 is a flowchart illustrating processing executed by a second control circuit provided to the electric motor control device according to this embodiment of the present disclosure.
Fig. 8 is a flowchart illustrating processing executed by a third control circuit provided to the electric motor control device according to this embodiment of the present disclosure.
Fig. 9 is a schematic time chart when a conventional electric motor control device performs a control.

### MODES FOR CARRYING OUT THE DISCLOSURE

Hereinafter, an electric motor control device, a robot having the control device, and a method of controlling an electric motor according to one embodiment of the present disclosure, are described with reference to the accompanying drawings. Note that the present disclosure is not limited to this embodiment. Moreover, below, the same reference characters are given to the same or corresponding elements throughout the drawings to omit redundant description.

### (Robot 10)

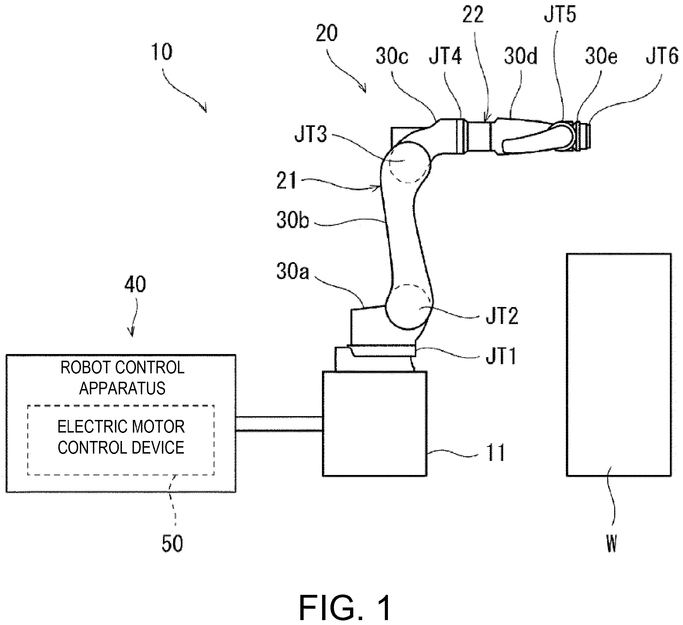

Fig. 1 is a schematic view illustrating the entire configuration of the robot according to this embodiment. As illustrated in Fig. 1, a robot 10 according to this embodiment is provided with a pedestal 11, a robotic arm 20 coupled at its base-end part to the pedestal 11, an end effector (not illustrated) attached to a tip end of the robotic arm 20, and a robot control apparatus 40 which controls operation of the robotic arm 20 and the end effector.

### (Robotic Arm 20)

As illustrated in Fig. 1, the robotic arm 20 is a vertically-articulated robotic arm having six joint shafts JT1 to JT6, and six links 30a to 30e sequentially coupled to each other through the joint shafts. Each of the joint shafts JT1 to JT6 is provided with an electric motor 32 (described later).

A coupled body of the links and the joint shafts, comprised of the joint shaft JT1, the link 30a, the joint shaft JT2, the link 30b, the joint shaft JT3, and the link 30c, constitutes a first arm part 21. In detail, the joint shaft JT1 couples the pedestal 11 to a base-end part of the link 30a so as to be rotatable about a vertical axis. The joint shaft JT2 couples a tip-end part of the link 30a to a base-end part of the link 30b so as to be rotatable about a horizontal axis. The joint shaft JT3 couples a tip-end part of the link 30b to a base-end part of the link 30c so as to be rotatable about a horizontal axis.

A coupled body of the links and the joint shafts, comprised of the joint shaft JT4, the link 30d, the joint shaft JT5, the link 30e, and the joint shaft JT6, constitutes a second arm part 22. In detail, the joint shaft JT4 couples a tip-end part of the link 30c to a base-end part of the link 30d so as to be rotatable about an axis extending in a longitudinal direction of the link 30c. The joint shaft JT5 couples a tip-end part of the link 30d to a base-end part of the link 30e so as to be rotatable about an axis extending in a direction perpendicular to a longitudinal direction of the link 30d. The joint shaft JT6 couples a tip-end part of the link 30e to a base-end part of the end effector so as to be rotatable in a twisted manner.

### (Electric Motor 32)

In this embodiment, the electric motors 32 are provided to the joint shafts JT1 to JT6 to drive them, respectively. Note that, below, unless particularly necessary, only one of the six electric motors 32 (in this embodiment, particularly, the electric motor 32 provided to the joint shaft JT3) is described, and other similar description is not repeated.

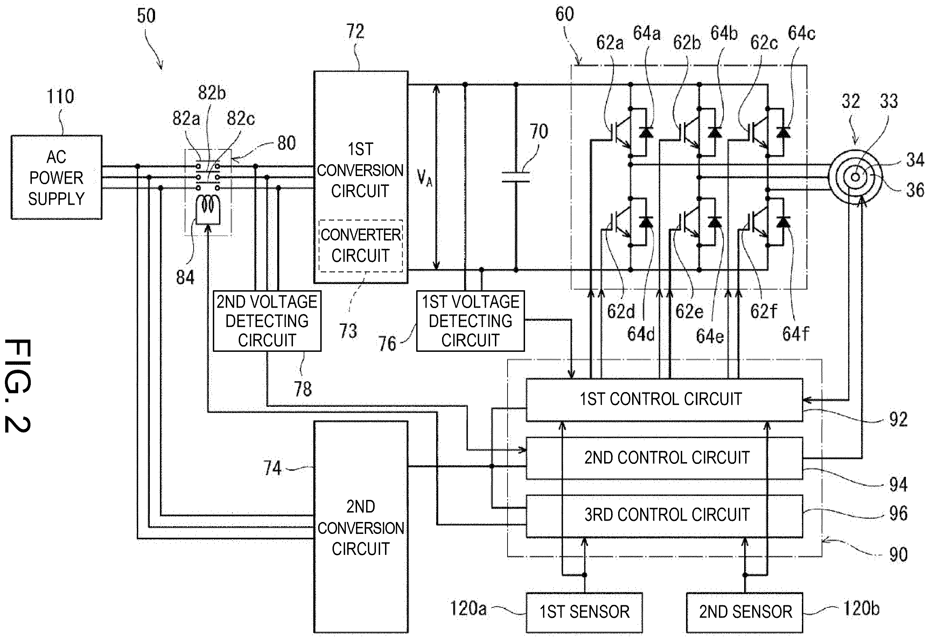

In this embodiment, the electric motor 32 is configured as a 3-phase alternating current (AC) motor. The electric motor 32 is braked by a non-excitation-actuated-type electromagnetic brake 36 (see Fig. 2), in addition to by a dynamic braking by an inverter circuit 60 (described later). Here, the non-excitation-actuated-type electromagnetic brake 36 is configured to have a coil (not illustrated), and brake the electric motor 32 (i.e., actuates the brake) when the coil is excited, and not to brake the electric motor 32 (i.e., does not actuate the brake) when the coil is excited.

### (Robot Control Apparatus 40)

Although a concrete configuration of the robot control apparatus 40 is not particularly limited, it may be implemented by a known processor (e.g., a CPU) operating based on a program stored in a storage part (e.g., a memory). Note that, as illustrated in Fig. 1, an electric motor control device 50 according to this embodiment is configured as a part of the robot control apparatus 40.

### (Electric Motor Control Device 50)

The electric motor control device 50 (hereinafter, may simply be referred to as the "control device 50") according to this embodiment is provided in order to control the operation of the electric motors 32 each having a rotational shaft 33 which is rotatable by the robotic arm 20 being affected by the gravity (external force). Note that, below, unless particularly necessary, only a case where the control device 50 controls the operation of the electric motor 32 provided to the joint shaft JT3 is described, and other similar description is not repeated.

### (Configuration Required for Applying Dynamic Braking)

Fig. 2 is a circuit diagram illustrating the electric motor control device according to this embodiment. As illustrated in Fig. 2, the electric motor control device 50 according to this embodiment is provided with an inverter circuit 60 which converts direct-current (DC) power into alternating-current (AC) power, and outputs the converted AD power to the electric motor 32, a first control circuit 92 which controls the inverter circuit 60, and a first voltage detecting circuit 76 which detects a voltage value V_{A} between power-supply input terminals of the inverter circuit 60, and outputs the detected voltage value V_{A} to the first control circuit 92.

The inverter circuit 60 is configured as a 3-phase inverter. The inverter circuit 60 can output the converted AC power to the electric motor 32 which is a 3-phase AC motor. The inverter circuit 60 has six IGBTs (Insulated Gate Bipolar Transistors) 62a to 62f as arms.

Here, in this embodiment, each of the switching devices (i.e., the six IGBTs 62a to 62f) is referred to as the "arm," and an upper-and-lower pair of the arms of the inverter circuit 60 may be referred to as the "phase." Here, the IGBTs 62a and 62d belong to a U-phase, the IGBTs 62b and 62e belong to a V-phase, and the IGBTs 62a and 62d belong to a W-phase. Since the inverter circuit 60 is the 3-phase inverter, it has the six arms and the three phases.

The inverter circuit 60 further has reflux diodes 64a to 64f parallelly connected to the six IGBTs 62a to 62f, respectively. In each of the reflux diodes 64a to 64f, the cathode is positioned on a higher side of the anode in an electric potential.

The first control circuit 92, and a second control circuit 94 and a third control circuit 96 (described later) (hereinafter, these three may collectively be referred to as the "control circuit 90") is electrically connected to an AC power supply 110 via a second conversion circuit 74. Here, the second conversion circuit 74 is provided to suitably convert a form of AC power supplied from the AC power supply 110 and output it to the control circuit 90.

The first control circuit 92 acquires, from a first sensor 120a provided to the robot 10, first state data indicating a state of the robot 10 (i.e., a state of the device having the electric motor 32), and acquires, from a second sensor 120b provided to the robot 10, second state data indicating a state of a workpiece W to which a work is performed by the robot 10.

Here, an encoder 34 which detects a rotational position of the rotational shaft 33 is attached to the rotational shaft 33 of the electric motor 32. Then, the first control circuit 92 can servo-control the electric motor 32 based on the rotational position of the rotational shaft 33 detected by the encoder 34.

The first control circuit 92 servo-controls the electric motor 32 by the inverter circuit 60 when the voltage value V_{A} between the power-supply input terminals of the inverter circuit 60 is detected to be at or above a given voltage value required for the servo-control of the electric motor 32. On the other hand, the first control circuit 92 applies the dynamic braking to the electric motor 32 by forming a short circuit in the inverter circuit 60 when the voltage value V_{A} between the power-supply input terminals of the inverter circuit 60 is detected to be below the given voltage value.

The first control circuit 92 can short-circuit all of the three phases of the electric motor 32 to form the short circuit by turning OFF the three upper arms in the inverter circuit 60, and turning ON the three lower arms (i.e., turning OFF the IGBTs 62a to 62c, and turning ON the IGBTs 62d to 62f).

### (Configuration Required for Servo-Control for Deceleration Stop)

The electric motor control device 50 according to this embodiment is further provided with a first conversion circuit 72 (conversion circuit) which converts the form of the AC power supplied from the AC power supply 110 (the form of power supplied from the power supply), and outputs the converted AC power to the inverter circuit 60, and a capacitor 70 parallelly connected to the first conversion circuit 72 and the inverter circuit 60 between the first conversion circuit 72 and the inverter circuit 60.

The first conversion circuit 72 includes a converter circuit 73 which converts the AC power supplied from the AC power supply 110 into DC power. Note that, for example, the first conversion circuit 72 may further include a booster circuit which boosts the AC power supplied from the AC power supply 110, and outputs the boosted AC power to the inverter circuit 60.

Then, the first control circuit 92 detects abnormality such that the DC power cannot correctly be supplied to the inverter circuit 60, or prediction of the abnormality, based on at least one of the first state data acquired from the first sensor 120a and the second state data acquired from the second sensor 120b, and starts the servo-control for the deceleration stop of the electric motor 32.

Note that the factors of the abnormality may be variously considered in addition to those described above. For example, the first control circuit 92 may detect the abnormality or the prediction of the abnormality based on that an emergency-stop switch is pressed, the supply of power from the AC power supply 110 is intercepted by a breaker, the converter circuit 73 is emergently stopped, etc., and start the servo-control for the deceleration stop of the electric motor 32 to emergently stop the robot 10.

Alternatively, the first control circuit 92 may detect the abnormality or the prediction of the abnormality based on that an enabling switch provided to a teach pendant is pressed, entering to the inside of a safety fence or a light curtain is detected, an external force is applied to the robot 10 by a sensor, etc., and start the servo-control for the deceleration stop of the electric motor 32 to protectively stop the robot 10.

### (Configuration to Actuate Non-excitation-actuated-type Electromagnetic Brake 36)

The electric motor control device 50 according to this embodiment is further provided with the second control circuit 94 which controls operation of the non-excitation-actuated-type electromagnetic brake 36 attached to the electric motor 32, and a second voltage detecting circuit 78 which detects a voltage value V_{B} (not illustrated) between input terminals of the first conversion circuit 72, and outputs the voltage value V_{B} to the second control circuit 94.

The second control circuit 94 detects abnormality such that the DC power cannot correctly be supplied to the inverter circuit 60, or prediction of the abnormality, based on that the voltage value V_{B} (not illustrated) detected by the second voltage detecting circuit 78 is out of a given normal range, and starts the control to brake the electric motor 32 by the non-excitation-actuated-type electromagnetic brake 36.

As described above, although various factors may be considered regarding the detection of the abnormality such that the DC power cannot correctly be supplied to the inverter circuit 60, or the prediction of the abnormality, here, similar description is not repeated.

### (Configuration to Control Switching Circuit 80)

The electric motor control device 50 according to this embodiment is further provided with a switching circuit 80 which switches whether to supply AC power from the AC power supply 110 to the inverter circuit 60, and the third control circuit 96 which controls the switching circuit 80 based on at least one of the first state data indicating the state of the robot 10 (in other words, the device having the electric motor 32), and the second state data indicating the state of the workpiece W to which the work is performed by the robot 10.

The switching circuit 80 has three switches 82a to 82c, and a coil 84 for turning the three switches 82a to 82c ON in an excited state, and turning the three switches 82a to 82c OFF in a non-excited state.

The third control circuit 96 is electrically connected to the coil 84 of the switching circuit 80, and can switch ON/OFF of the switching circuit 80 by switching between the excited state and the non-excited state of the coil 84. Then, the third control circuit 96 detects abnormality or prediction of the abnormality based on at least one of the first state data acquired from the first sensor 120a and the second state data acquired from the second sensor 120b, and turns the switching circuit 80 OFF to interrupt the AC power supplied from the AC power supply 110 to the first conversion circuit 72.

### (Effects)

According to the electric motor control device 50 according to this embodiment, when the voltage value V_{A} between the power-supply input terminals of the inverter circuit 60 is detected to be below the given voltage value required for the servo-control of the electric motor 32, the short circuit is formed in the inverter circuit 60, and thus, the dynamic braking acts on the electric motor 32. As a result, the electric motor control device 50 can certainly brake the electric motor 32 of which the rotational shaft 33 could be rotated by the gravity (external force).

Moreover, the electric motor control device 50 according to this embodiment forms the short circuit in the inverter circuit 60 which servo-controls the electric motor 32, and thus, a circuit dedicated for applying the dynamic braking to the electric motor 32 (e.g., a relay circuit) is unnecessary to be provided separately. Therefore, the circuit configuration can be simplified.

Here, in the case where the dedicated circuit is provided separately, for example, the dedicated circuit is used only in emergency where abnormality occurs to the robot 10. In such a case, even if the dedicated circuit is failed, the failure is difficult to be noticed during normal operation of the robot 10, and thus, it is highly possible that the failure is left as it is. Therefore, in this case, the dynamic braking may not act in emergency, which may lead to a significant accident.

On the other hand, the electric motor control device 50 according to this embodiment uses the inverter circuit 60 which servo-controls the electric motor 32 to apply the dynamic braking, and thus, when the inverter circuit 60 is failed, the failure may be noticed during the normal operation of the robot 10. Therefore, by fixing the inverter circuit 60 when the failure of the inverter circuit 60 is recognized, it can be prevented in advance that the dynamic braking does not act in emergency.

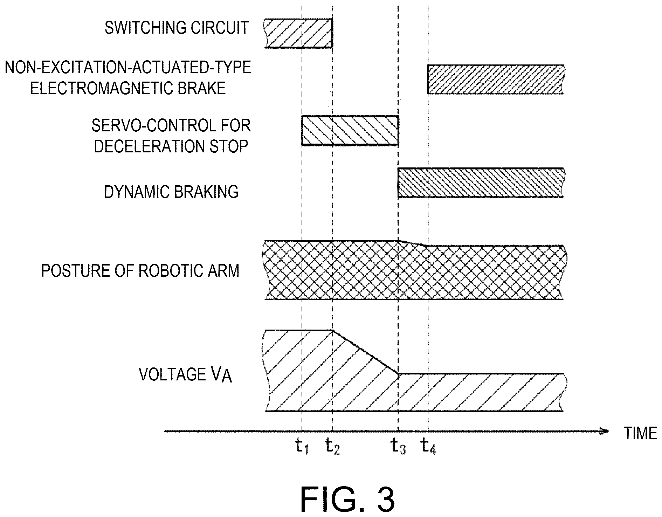

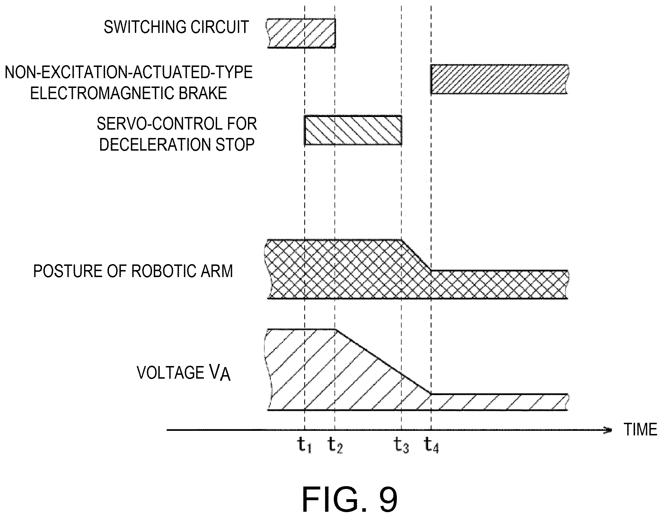

Here, based on Figs. 3 and 9, the effects achieved by the electric motor control device 50 according to this embodiment are described in more detail. Fig. 3 is a schematic time chart when the electric motor control device according to this embodiment performs a control in a first mode. Fig. 9 is a schematic time chart when the conventional electric motor control device performs a control. Note that, among components provided to a conventional electric motor control device 50' (not illustrated), components corresponding to those of the electric motor control device 50 of this embodiment are denoted by the same reference characters as those used for the description of the control device 50, with additional ' (apostrophe) after each reference character, and here, similar description and illustration are not repeated.

For example, as illustrated in Fig. 9, when the conventional electric motor control device 50' detects abnormality at a time t₁ based on at least one of first state data indicating a state of a robot 10' and second state data indicating a state of a workpiece W', it starts a servo-control for a deceleration stop of an electric motor 32'.

Moreover, when the conventional electric motor control device 50' detects the abnormality at the time t₁ as described above, it starts a control for turning OFF a switching circuit 80'. Here, a time lag "t₂-t₁" occurs from a start of the control for turning OFF the switching circuit 80', to the switching circuit 80' actually being turned OFF. This time lag occurs because slight time is required to make a coil 84' excited, and to turn OFF switches 82a' to 82c' by the excited coil 84'.

Then, when the switching circuit 80' is actually turned OFF, and AC power supplied to an inverter circuit 60' from an AC power supply 110' is interrupted, a second control circuit 94' detects abnormality such that DC power cannot correctly be supplied to the inverter circuit 60', or prediction of the abnormality, based on that a voltage value V_{B} detected by a second voltage detecting circuit 78' is out of a given normal range, and starts a control to brake the electric motor 32' by a non-excitation-actuated-type electromagnetic brake 36'.

Here, a time lag "t₄-t₂" occurs from a start of the control to brake the electric motor 32' by the non-excitation-actuated-type electromagnetic brake 36', to the non-excitation-actuated-type electromagnetic brake 36' actually being actuated. This time lag is caused because, for example, when a coil (not illustrated) provided to the non-excitation-actuated-type electromagnetic brake 36' is switched to a non-excited state, a counter-electromotive force occurs to the coil, and reflux current flows via a reflux diode (not illustrated) parallelly connected to the coil.

Note that, for example, a time of about 200ms takes from the start of the control to turn OFF the switching circuit 80', to the non-excitation-actuated-type electromagnetic brake 36' actually being actuated (i.e., from the time t₄ to the time t₁).

Moreover, when the conventional electric motor control device 50' detects the abnormality based on at least one of the first and second state data at the time t₁, it starts the servo-control for the deceleration stop of the electric motor 32', in addition to starting the control to turn OFF the switching circuit 80' as described.

Even after the AC power supplied to the inverter circuit 60' from the AC power supply 110' is interrupted as described above, the conventional electric motor control device 50' can perform the servo-control for the deceleration stop of the electric motor 32' for a while (for t₃-t₂), for example, by using electrostatic energy accumulated in a capacitor 70'.

However, in order to servo-control the electric motor 32', generally, comparatively large power is required between a first conversion circuit 72' and the electric motor 32'. Then, after the time t₃ when a voltage value V_{A}' between input terminals of the inverter circuit 60' becomes below a given voltage value required for the servo-control of the electric motor 32', the servo-control for the deceleration stop becomes impossible.

Therefore, as illustrated in Fig. 9, when the time t₃ (the time when the servo-control for the deceleration stop of the electric motor 32' becomes impossible) is earlier than the time t₄ (the time when the non-excitation-actuated-type electromagnetic brake 36' is actually actuated), the conventional electric motor control device 50' cannot brake the non-excitation-actuated-type electromagnetic brake 36' from t₃ to t₄.

Accordingly, between the time t₃ and the time t₄, for example, a part of a robotic arm 20' on a tip-end side of a joint shaft JT3' is affected by the gravity, and thus, the tip-end side part downwardly pivots centering on a rotational shaft 33' of the electric motor 32' provided to the joint shaft JT3'. Therefore, for example, the tip-end side part may contact the workpiece W'.

On the other hand, as illustrated in Fig. 3, the electric motor control device 50 according to this embodiment forms, between the time t₃ and the time t₄, the short circuit in the inverter circuit 60 in order to apply the dynamic braking to the electric motor 32. Therefore, between the time t₃ and the time t₄, the electric motor control device 50 can prevent that, for example, a part of the robotic arm 20 on a tip-end side of the joint shaft JT3 downwardly pivots centering on the rotational shaft 33 of the electric motor 32 provided to the joint shaft JT3. As a result, the electric motor control device 50 according to this embodiment can certainly brake the electric motor 32 of which the rotational shaft 33 could be rotated by the gravity (external force).

Moreover, the electric motor control device 50 according to this embodiment performs the servo-control for the deceleration stop of the electric motor 32 between the time t₁ and the time t₃ based on at least one of the first state data acquired from the first sensor 120a and the second state data acquired from the second sensor 120b. The time t₁ is the time when the abnormality such that the DC power cannot correctly be supplied to the inverter circuit 60, or the prediction of the abnormality is detected. The time t₃ is the time when the voltage value V_{A} between the power-supply input terminals of the inverter circuit 60 is detected to be below the given voltage value required for the servo-control of the electric motor (i.e., the time when the dynamic braking acts on the electric motor 32). Therefore, the electric motor control device 50 can further certainly brake the electric motor 32. Moreover, since the electric motor 32 is not suddenly stopped, degradation and damage to the electric motor 32 can be prevented.

The electric motor control device 50 according to this embodiment can brake the electric motor 32 by the non-excitation-actuated-type electromagnetic brake 36, in addition to by applying the dynamic braking to the electric motor 32. In detail, between the time t₁ to the time t₃, the servo-control for the deceleration stop of the electric motor 32 is performed, and the dynamic braking is applied after the time t₃ as well as the non-excitation-actuated-type electromagnetic brake 36 being actuated after the time t₄, and thus, the electric motor 32 can further certainly be braked. As a result, the electric motor control device 50 according to this embodiment can further certainly brake the electric motor 32.

Moreover, in the electric motor control device 50 according to this embodiment, since the first conversion circuit 72 (conversion circuit) has the converter circuit 73 which converts the AC power into the DC power, AC power can be supplied from the AC power supply 110.

Moreover, the electric motor control device 50 according to this embodiment is provided with the capacitor 70 which is parallelly connected to the first conversion circuit 72 and the inverter circuit 60. Therefore, between the time t₂ and t₃, the servo-control for the deceleration stop of the electric motor 32 can be performed by using the electrostatic energy accumulated in the capacitor 70.

Moreover, in this embodiment, the three upper arms of the inverter circuit 60 are turned OFF while the three lower arms are turned ON, and thus, all of the three phases of the electric motor 32 (3-phase AC motor) are short-circuited. Accordingly, between the time t₃ and time t₄, compared to a case where two phases are short-circuited so as to form the short circuit, the part of the robotic arm 20 on the tip-end side of the joint shaft JT3 downwardly pivots more smoothly and slowly. Therefore, the electric motor control device 50 can further certainly brake the electric motor 32.

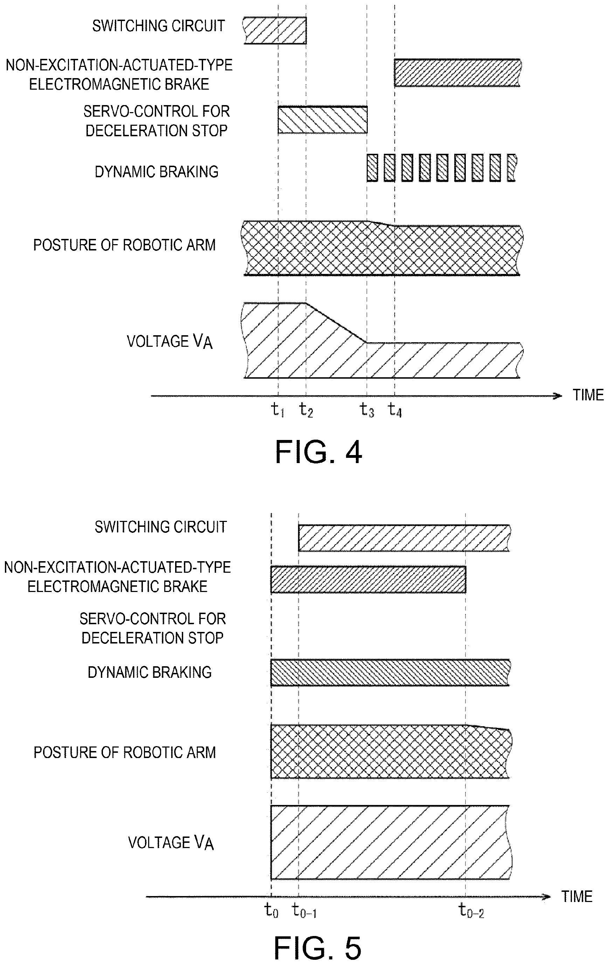

Fig. 4 is a schematic time chart when the electric motor control device according to this embodiment performs a control in a second mode. As illustrated in Fig. 4, in this embodiment, when the first control circuit 92 applies the dynamic braking, the state of the inverter circuit 60 can be switched in a pulse form between the states of forming and not forming the short circuit. Accordingly, the electric motor control device 50 according to this embodiment can adjust a magnitude of the braking force caused by the dynamic braking.

Fig. 5 is a schematic time chart when the electric motor control device according to this embodiment performs a control in a third mode. As illustrated in Fig. 5, in this embodiment, the first control circuit 92 can form the short circuit in the inverter circuit 60 to apply the dynamic braking to the electric motor 32, in an initial state (a time t₀ in Fig. 5) where the AC power is supplied from the AC power supply 110 to the first control circuit 92 and the first control circuit 92 starts operating, in addition to when the voltage value between the power-supply input terminals of the inverter circuit 60 is detected to be below the given voltage value.

Therefore, when the AC power is supplied to the robot 10 from the AC power supply 110, and the robot 10 starts operating, and accordingly, when the coil of the non-excitation-actuated-type electromagnetic brake 36 is switched from the non-excited state to the excited state and the non-excitation-actuated-type electromagnetic brake 36 becomes unactuated (after a time t₀₋₂ in Fig. 5), the robotic arm 20 can be prevented from being pivoted downwardly.

Moreover, when the robot 10 is provided with a gas balancer (not illustrated) so as to control the operation of the robotic arm 20, and even when sufficient amount of gas is not filled in the gas balancer, the robotic arm 20 can be prevented from being pivoted downwardly.

Note that, not only at the start of the operation of the robot 10 by the AC power being supplied from the AC power supply 110, but even during the operation of the robot 10, when the non-excitation-actuated-type electromagnetic brake 36 does not operate correctly as described above, the sensors can detect the malfunction and send it to the electric motor control device 50 so as to apply the dynamic braking to the electric motor 32 in a similar method, and thus, the robotic arm 20 can be prevented from being pivoted downwardly.

### (Method of Controlling Electric Motor)

Next, one example of a method of controlling an electric motor according to this embodiment of the present disclosure is described. Note that, here, a case is described referring to Figs. 4 to 6, in which the robot 10 provided with the electric motor control device 50 of the embodiment described above is prepared in advance, and then, the method of controlling the electric motor according to this embodiment is performed using the electric motor control device 50 described above.

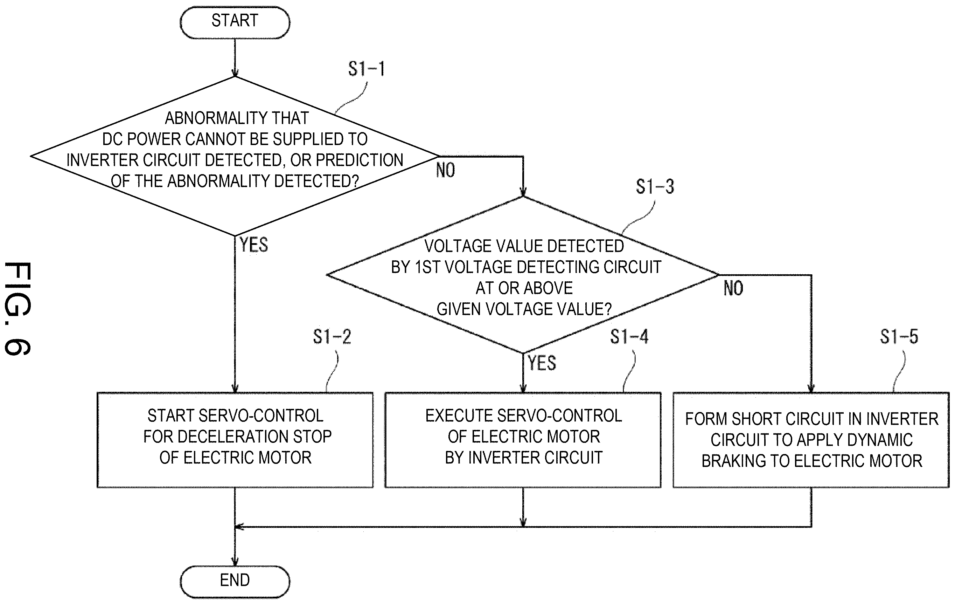

First, in the method of controlling the electric motor according to this embodiment, steps executed by the first control circuit 92 described in the above embodiment, are described based on Fig. 6. Fig. 6 is a flowchart illustrating processing executed by the first control circuit provided to the electric motor control device according to the embodiment described above.

The first control circuit 92 determines whether the abnormality such that the DC power cannot be supplied to the inverter circuit 60, or the prediction of the abnormality is detected (Step S1-1 in Fig. 6).

Then, if the abnormality or the prediction of the abnormality is detected (YES at Step S1-1 in Fig. 6), the first control circuit 92 starts the servo-control for the deceleration stop of the electric motor 32 (Step S1-2 in Fig. 6).

On the other hand, if the abnormality or the prediction of the abnormality is detected (NO at Step S1-1 in Fig. 6), the first control circuit 92 determines whether the voltage value V_{A} detected by the first voltage detecting circuit 76 is at or above the given voltage value required for the servo-control of the electric motor (Step S1-3 in Fig. 6).

Then, if the voltage value V_{A} is detected to be at or above the given voltage value (YES at Step S1-3 in Fig. 6), the first control circuit 92 executes the servo-control of the electric motor 32 by the inverter circuit 60 (Step S1-4 in Fig. 6 (First Step)).

On the other hand, if the voltage value V_{A} is detected to be below the given voltage value (NO at Step S1-3 in Fig. 6), the first control circuit 92 forms the short circuit in the inverter circuit 60 so as to apply the dynamic braking to the electric motor 32 (Step S1-5 in Fig. 6 (Second Step)).

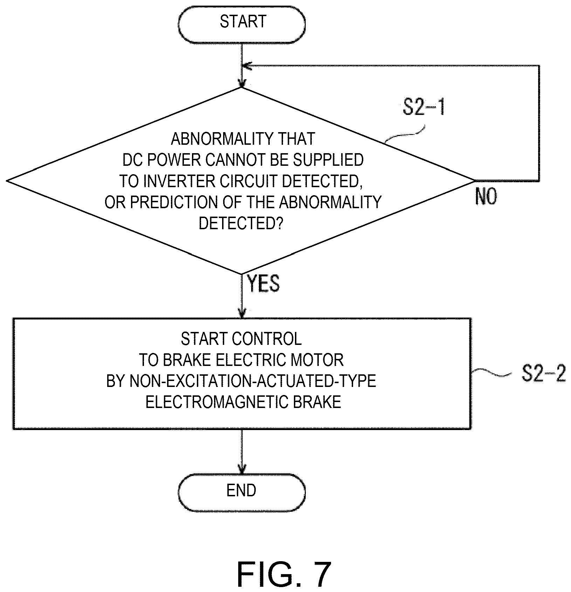

Next, in the method of controlling the electric motor according to this embodiment, steps executed by the second control circuit 94 described in the above embodiment are described based on Fig. 7. Fig. 7 is a flowchart illustrating processing executed by the second control circuit provided to the electric motor control device according to the embodiment described above.

The second control circuit 94 determines whether the abnormality such that the DC power cannot be supplied to the inverter circuit 60, or the prediction of the abnormality is detected (Step S2-1 in Fig. 7).

Then, if the abnormality or the prediction of the abnormality is detected (YES at Step S2-1 in Fig. 7), the second control circuit 94 starts the control to brake the electric motor 32 by the non-excitation-actuated-type electromagnetic brake 36 (Step S2-2 in Fig. 7).

On the other hand, if the abnormality and the prediction of the abnormality are not detected (NO at Step S2-1 in Fig. 7), the second control circuit 94 returns to Step S2-1 to repeat the processing.

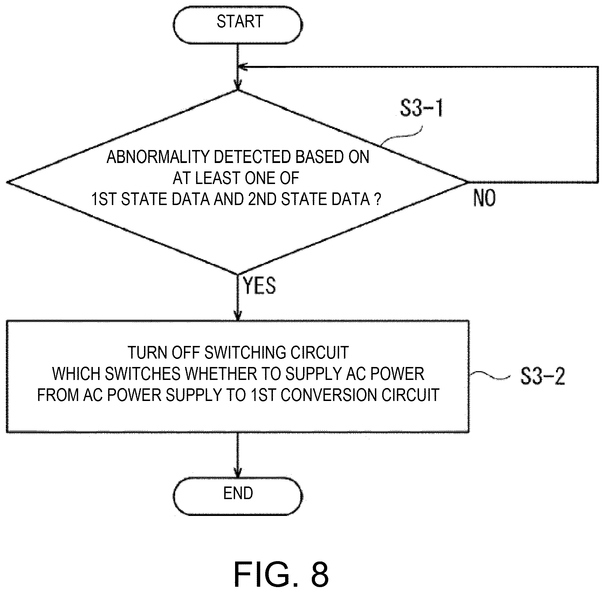

Finally, in the method of controlling the electric motor according to this embodiment, steps executed by the third control circuit 96 described in the above embodiment are described based on Fig. 8. Fig. 8 is a flowchart illustrating processing executed by the third control circuit provided to the electric motor control device according to the embodiment described above.

First, the third control circuit 96 determines whether the abnormality occurs based on at least one of the first and second state data (Step S3-1 in Fig. 8).

Then, if the abnormality is detected based on at least one of the first and second state data (YES at Step S3-1 in Fig. 8), the third control circuit 96 turns OFF the switching circuit 80 which switches whether to supply the AC power from the AC power supply 110 to the first conversion circuit 72 (Step S3-2 in Fig. 8).

On the other hand, if the abnormality is not detected based on at least one of the first and second state data (NO at Step S3-1 in Fig. 8), the third control circuit 96 returns to Step S3-1 to repeat the processing.

Note that the steps executed by the first control circuit 92 (descried based on Fig. 6), the steps executed by the second control circuit 94 (described based on Fig. 7), and the steps executed by the third control circuit 96 (described based on Fig. 8) are preferably executed in parallel to each other.

### (Modifications)

It is apparent for a person skilled in the art from the above description that many improvements and other embodiments of the present disclosure are possible. Therefore, the above description is to be interpreted only as illustration, and it is provided in order to teach a person skilled in the art the best mode for implementing the present disclosure. The details of the structures and/or the functions may be substantially changed, without departing from the spirit of the present disclosure.

In the embodiment described above, the rotational shaft 33 of the electric motor 32 is rotatable by the robotic arm 20 being affected by the gravity. However, it is not limited to this, but the rotational shaft 33 of the electric motor 32 may be rotatable by the robotic arm 20 being affected by an external force other than the gravity (e.g., force applied by a human worker).

In the embodiment described above, the electric motor control device 50 is provided in order to control the operation of the electric motors 32 which drive the corresponding joint shafts JT1 to JT6 of the robot 10. However, it is not limited to this, but the electric motor control device 50 may be provided in order to control operation of an electric motor of which a rotational shaft could be rotated by an external force, in a device other than the robot 10 (e.g., an actuator which drives a drill used at a worksite).

In the embodiment described above, the inverter circuit 60 has the IGBTs (Insulated Gate Bipolar Transistors) 62a to 62f as the arms. However, it is not limited to this, but the inverter circuit 60 may have FETs (Field Effect Transistors) as arms, other transistors, or other switching devices.

In the embodiment described above, the first control circuit 92 turns OFF the IGBTs 62a to 62c (three upper arms) of the inverter circuit 60, and turns ON the IGBTs 62d to 62f (three lower arms) so as to short-circuit all of the three phases of the electric motor 32 (3-phase AC motor) to form the short circuit. However, it is not limited to this, but the first control circuit 92 may turn ON the IGBTs 62a to 62c of the inverter circuit 60, and turn OFF the IGBTs 62d to 62f so as to short-circuit all of the three phases of the electric motor 32 to form the short circuit.

Further, the first control circuit 92 may turn ON all of the three arms in one of a first group comprised of the IGBTs 62a to 62c (three upper arms) and a second group comprised of the IGBTs 62d to 62f (three lower arms) in the inverter circuit 60, and turn OFF all of the three arms in the other group, so as to short-circuit all of the three phases of the electric motor 30 (3-phase AC motor).

Therefore, when compared to a case where, for example, two phases of the electric motor 32 (3-phase AC motor) are short-circuited to form the short circuit, the part of the robotic arm 20 on the tip-end side of the joint shaft JT3 downwardly pivots more smoothly and slowly. As a result, the electric motor control device 50 can further certainly brake the electric motor 32.

Alternatively, the first control circuit 92 may turn ON the IGBTs 62a, 62b, and 62f of the inverter circuit 60, and turn OFF the IGBTs 62c, 62d, and 62e, so as to short-circuit all of the three phases of the electric motor 32 (3-phase AC motor) to form the short circuit.

Further, the first control circuit 92 may turn ON two IGBTs in one of the first group comprised of the IGBTs 62a to 62c (three upper arms) and the second group comprised of the IGBTs 62d to 62f (three lower arms) in the inverter circuit 60, turn ON or OFF one IGBT in the other group and belonging to the phase different from the fore-mentioned two IGBTs, and turn OFF all of the remaining three IGBTs, so as to short-circuit two phases of the electric motor 32 (3-phase AC motor) to form the short circuit.

In the embodiment described above, AC power is supplied to the electric motor control device 50 from the AC power supply 110. However, it is not limited to this, but DC power may be supplied to the electric motor control deice 50 from a DC power supply. In such a case, the first conversion circuit 72 may not have the converter circuit 73, or the first conversion circuit 72 itself may not be provided.

In the embodiment described above, the electric motor control device 50 controls the operation of the electric motor 32 which is the 3-phase AC motor. However, it is not limited to this, but the electric motor control device 50 may control operation of a single-phase AC motor, or control operation of other electric motors. Note that, in such a case, the configuration of the inverter circuit 60 and the other configurations are required to be altered so as to comply with a configuration of the electric motor.

In the embodiment described above, the electric motor control device 50 is configured to be a part of the robot control apparatus 40. However, it is not limited to this, but the electric motor control device 50 may be provided separately from the robot control apparatus 40.

In the embodiment described above, the switching circuit 80 is configured to be the relay circuit. However, it is not limited to this, but the switching circuit may be a diode, an FET, an IGBT, or other switching devices.

In the embodiment described above, the robot 10 is provided with the first sensor 120a which acquires the first state data indicative of robot's state, and the second sensor 120b which acquires the second state data indicative of the state of the workpiece W to which the work is performed by the robot 10. However, it is not limited to this, but the robot 10 may be provided with one of the first sensor 120a and the second sensor 120b. In such a case, the electric motor control device 50 may determine the occurrence of the abnormality based on the first state data or the second state data.

Moreover, the robot 10 may not be provided with either of the first sensor 120a and the second sensor 120b. In such a case, for example, the electric motor control device 50 may apply the dynamic braking to the electric motor 32, start the servo-control for the deceleration stop of the electric motor 32, or act the non-excitation-actuated-type electromagnetic brake 36 on the electric motor 32, based on the factors for the emergency stop or the protective stop of the robot 10 described above.

In the embodiment described above, the second voltage detecting circuit 78 detects the voltage value V_{B} between the input terminals of the first conversion circuit 72 (conversion circuit), and outputs the detected voltage value V_{B} to the second control circuit 94. However, it is not limited to this, but the second voltage detecting circuit 78 may detect a voltage value between output terminals of the AC power supply 110, and output the detected voltage value to the second control circuit 94. Then, the second control circuit 94 may detect, based on that the voltage value is out of a given normal range, the abnormality such that the DC power cannot correctly be supplied to the inverter circuit 60, or the prediction of the abnormality, and start the control to brake the electric motor 32 by the non-excitation-actuated-type electromagnetic brake 36.

Note that, although in the embodiment described above the electric motor control device 50 has the circuit configuration illustrated in Fig. 2, it is not limited to this. For example, when a part of the control circuit 90 is provided to a component (e.g., a teach pendant) which is possibly touched by a worker, or assumed to be touched by a worker, a conversion circuit of an insulation type may be provided, and it may convert a form of the power so as to supply the power to the component. Therefore, the safety of the worker can be secured.

### DESCRIPTION OF REFERENCE CHARACTERS

- 10: Robot
- 11: Pedestal
- 20: Robotic Arm
- 30: Link
- 32: Electric Motor
- 33: Rotational Shaft
- 34: Encoder
- 36: Non-excitation-actuated-type Electromagnetic Brake
- 40: Robot Control Apparatus
- 50: Electric Motor Control Device
- 60: Inverter Circuit
- 62: IGBT
- 64: Reflux Diode
- 70: Capacitor
- 72: First Conversion Circuit
- 73: Converter Circuit
- 74: Second Conversion Circuit
- 80: Switching Circuit
- 82: Switch
- 84: Coil
- 90: Control Circuit
- 92: First Control Circuit
- 94: Second Control Circuit
- 96: Third Control Circuit
- 110: AC Power Supply
- 120a: First Sensor
- 120b: Second Sensor
- JT: Joint Shaft
- W: Workpiece

## Claims

1. An electric motor control device configured to control operation of an electric motor of which a rotational shaft is rotatable by an external force, comprising:
an inverter circuit configured to convert direct-current power into alternating-current power and output the converted alternating-current power to the electric motor;
a first control circuit configured to control the inverter circuit; and
a first voltage detecting circuit configured to detect a voltage value between power-supply input terminals of the inverter circuit, and output the voltage value between the input terminals to the first control circuit,
wherein the first control circuit is adapted to:
servo-control the electric motor by the inverter circuit when the voltage value between the power-supply input terminals of the inverter circuit is detected to be at or above a given voltage value required for the servo-control of the electric motor; and
apply dynamic braking to the electric motor by forming a short circuit in the inverter circuit when the voltage value between the power-supply input terminals of the inverter circuit is detected to be below the given voltage value.

2. The electric motor control device of claim 1, wherein the first control circuit starts a servo-control for a deceleration stop of the electric motor when abnormality is detected or the abnormality is predicted, the abnormality being that the direct-current power is not correctly to be supplied to the inverter circuit.

3. The electric motor control device of claim 1 or 2, wherein the electric motor is also braked by a non-excitation-actuated-type electromagnetic brake in addition to by the dynamic braking,
wherein the electric motor control device further comprises a second control circuit configured to control operation of the non-excitation-actuated-type electromagnetic brake, and
wherein the second control circuit starts a control to brake the electric motor by the non-excitation-actuated-type electromagnetic brake when abnormality is detected or the abnormality is predicted, the abnormality being that the direct-current power is not correctly to be supplied to the inverter circuit.

4. The electric motor control device of claim 3, further comprising:
a conversion circuit configured to convert a form of power supplied from a power supply and output the converted power to the inverter circuit; and
a second voltage detecting circuit configured to detect a voltage value between output terminals of the power supply or a voltage value between input terminals of the conversion circuit, and output the detected voltage value to the second control circuit,
wherein the second control circuit detects the abnormality or the prediction of the abnormality based on that the voltage value detected by the second voltage detecting circuit is out of a given normal range, and starts the control to brake the electric motor by the non-excitation-actuated-type electromagnetic brake.

5. The electric motor control device of claim 4, wherein the power supply is an alternating-current power supply, and
wherein the conversion circuit has a converter circuit configured to convert alternating-current power supplied from the alternating-current power supply into direct-current power.

6. The electric motor control device of claim 4 or 5, further comprising a capacitor parallelly connected to the conversion circuit and the inverter circuit between the conversion circuit and the inverter circuit.

7. The electric motor control device of any one of claims 1 to 6, wherein the electric motor is configured to be a 3-phase alternating-current motor,
wherein the inverter circuit is configured to be a 3-phase inverter having three phases, and
wherein the first control circuit short-circuits all of the three phases of the 3-phase alternating-current motor to form the short circuit by turning ON all of three arms in one of a first group and a second group, and turning OFF all of three arms in the other group, or short-circuits two phases of the 3-phase alternating-current motor to form the short circuit by turning ON two arms in one of the groups, turning ON or OFF one arm in the other group and belonging to a phase different from the two arms, and turning OFF all of the remaining three arms, the first group being comprised of three upper arms and the second group being comprised of three lower arms in the inverter circuit.

8. The electric motor control device of claim 7, wherein the first control circuit turns OFF the three upper arms in the inverter circuit and turns ON the three lower arms to short-circuit all of the three phases of the 3-phase alternating-current motor to form the short circuit.

9. The electric motor control device of any one of claims 1 to 8, wherein, when the first control circuit applies the dynamic braking, the first control circuit is switchable in a pulse-like manner between a state in which the short circuit is formed in the inverter circuit, and a state in which the short circuit is not formed.

10. The electric motor control device of any one of claims 1 to 9, wherein the first control circuit applies the dynamic braking to the electric motor by forming the short circuit in the inverter circuit, in an initial state where power is supplied to the first control circuit from a power supply and the first control circuit starts operating, in addition to when the voltage value between the power-supply input terminals of the inverter circuit is detected to be below the given voltage value.

11. A robot, comprising:
the electric motor control device of any one of claims 1 to 10;
the electric motor of which the operation is controlled by the electric motor control device; and
a robotic arm having a joint shaft configured to be driven by the electric motor.

12. The robot of claim 11, wherein the external force is the gravity, and the rotational shaft of the electric motor is rotatable by the robotic arm being affected by the gravity.

13. A method of controlling operation of an electric motor of which a rotational shaft is rotatable by an external force,
wherein an inverter circuit and a first voltage detecting circuit are prepared in advance, the inverter circuit converting direct-current power into alternating-current power and outputting the converted alternating-current power into the electric motor, and the first voltage detecting circuit detecting a voltage value between power-supply input terminals of the inverter circuit,
the method comprising the steps of:
servo-controlling the electric motor by the inverter circuit when the voltage value between the power-supply input terminals of the inverter circuit is detected to be at or above a given voltage value required for the servo-control of the electric motor (First Step); and
applying dynamic braking to the electric motor by forming a short circuit in the inverter circuit when the voltage value between the power-supply input terminals of the inverter circuit is detected to be below the given voltage value (Second Step).
